# EUROPEAN PATENT SPECIFICATION

(11) **EP 2 754 480 B1**
(45) Date of publication and mention of the grant of the patent: **11.05.2022**
(21) Application number: 13150691.7
(22) Date of filing: 09.01.2013
(51) Int. Cl.: B01D 53/14, B01D 53/62, B01D 53/64, B01D 53/78, B01D 53/80, B01D 53/75

(54) **Flue gas treatment method and system for removal of carbon dioxide, sulfure dioxide, particulate material and heavy metals**
Abgasbehandlungsverfahren und -anlage zur Entfernung von Kohlendioxid, Schwefeldioxid, Partikeln und Schwermetallen
Procédé et dispositif de traitement des gaz d'échappement pour enlever le dioxyde de carbone, le dioxyde de soufre, des particules et des métaux lourds

(43) Date of publication of application: 16.07.2014
(73) Proprietor: General Electric Technology GmbH, 5400 Baden (CH)
(72) Inventor: Balfe, Michael Charles, 65203 Wiesbaden (DE); Kniesburges, Peter, 65197 Wiesbaden (DE)
(74) Representative: Wesela-Bauman, Grzegorz

(56) References cited:
- EP-A1- 2 335 804
- EP-A1- 2 510 998
- EP-A2- 0 553 643
- WO-A1-2006/022885
- US-A1- 2010 021 363
- US-A1- 2012 195 816

## Description

### Field of the invention

The present invention relates to flue gas cleaning methods and systems employing the chilled ammonia process (CAP) for removal of carbon dioxide from process gases.

### Background

In the combustion of a fuel, such as coal, oil, peat, waste, etc., in a combustion plant, such as a power plant, a hot process gas is generated, such a hot process gas, often referred to as a flue gas, containing, among other components, carbon dioxide, CO₂. The negative environmental effects of releasing carbon dioxide to the atmosphere have been widely recognized, and have resulted in the development of processes adapted for removing carbon dioxide from the hot process gas generated in the combustion of the above mentioned fuels. There are also other industries that generate large amounts of CO₂, including for example in the cement industry and steel industry.

The chilled ammonia based systems and processes (CAP) provide a relatively low cost means for capturing and removing CO₂ from a gas stream, such as, for example, a post combustion flue gas stream. An example of such a system and process has previously been disclosed in the published international patent application WO 2006/022885 titled "Ultra Cleaning of Combustion Gas Including the Removal of CO₂". The term "chilled" refers to the operating temperature of the CO₂ absorber in the chilled ammonia process, which is generally in the range of 0-20 °C, and preferably in the range of 0-10 °C. In the process described in WO 2006/022885, the absorption of CO₂ from a flue gas stream is achieved by contacting a chilled ammoniated solution or slurry in an absorber with a flue gas stream containing CO₂. The ammoniated solution containing absorbed CO₂ is subsequently regenerated by heating under increased pressure, whereby CO₂ is removed from the solution, and the regenerated solution can be reused in the CO₂ absorption process.

US2008/0178733 presents a gas cleaning system having a combined cooling and cleaning system comprising a first gas-liquid contacting device located upstream of the CO₂ absorber and operative for cooling the process gas by means of a cooling liquid, and for absorbing into the cooling liquid sulfur dioxide of the process gas, such that a cooling liquid containing sulfate is obtained. The combined cooling and cleaning system further comprises a second gas-liquid contacting device located downstream of the CO₂ absorber and operative for removing ammonia from the process gas, which has been treated in the CO₂ absorber, by means of bringing the process gas containing ammonia into contact with the cooling liquid containing sulfate.

The sulfate of the cooling liquid and the ammonia removed from the flue gas of the cooling liquid is sometimes used in the production of an ammonium sulfate by-product useful as fertilizer.

The gas cleaning system of US2008/0178733 is well adapted for the treatment of relatively clean CO₂ rich flue gas streams (low in e.g. particulate material and heavy metals) as produced, e.g. by modern power plants combusting higher quality fuels. However, industrial processes such as cement or steel production, burning lower quality coal or waste may generate flue gases with a higher acid, particulate material and/or heavy metal content than characteristic of most power plants. Although most cement plants utilize flue gas quench coolers combined with electrostatic precipitators to reduce particle and heavy metal concentrations, considerable residual levels remain in the flue gas. The remaining particulate material and heavy metal content can contaminate the cooling liquid, complicating the intended use of the liquid by-product.

US 2012/0195816 A1 discloses a gas treatment process and system. The system and process comprise a stage for removing sulfur dioxide from the gas stream by using ammonia. Subsequently, the gas stream is cooled and carbon dioxide is removed. Finally the ammonia contained in the gas is removed again.

EP 0 553 643 A2 discloses a method for treating combustion exhaust gas. Carbon dioxide is absorbed by using an aqueous alkanolamine solution. In doing so, carbon dioxide is captured and can be recovered subsequently. A desulfurization step can be provided before removing the carbon dioxide. The wet lime-gypsum method is proposed for desulfurization.

EP 2 510 998 A1 discloses a method according to the preamble of claim 1 and gas cleaning system according to the preamble of claim 5.

### Summary of the invention

An object of the present invention is to provide an improved chilled ammonia process and system for cleaning a process gas containing carbon dioxide and contaminants, such as sulfur dioxide, heavy metals and particulate material.

This object is solved by a method according to claim 1 and a gas cleaning system according to claim 5.

According to the invention, there is provided a method of cleaning a process gas containing carbon dioxide and contaminants, said method comprising the steps of:
bringing the process gas into direct contact with an alkaline solution or slurry, and capturing in the alkaline solution or slurry at least a part of the contaminants of the process gas; and
bringing the process gas, depleted in contaminants, into direct contact with a cooling liquid to form a cooled process gas;
wherein said alkaline solution or slurry is separate from the cooling liquid.

The method further comprises the steps of:
bringing the cooled process gas into direct contact with an ammoniated solution or slurry to remove, at least partly, carbon dioxide from the process gas, and to form a process gas containing ammonia; and
bringing the process gas containing ammonia into direct contact with a wash liquid to remove, at least partly, ammonia from the process gas.

The first stage of the cooling and cleaning system of the prior art chilled ammonia process flow scheme, as described in US2008/0178733, first applies a washing step capturing SO₂ using a solution of dissolved ammonia and SO₂ forming sulfite which depending on the availability of dissolved O₂ oxidizes to form sulfate producing an ammonia sulfate solution intended for use as fertilizer. Heavy metals or acidic components entering the chilled ammonia process plant via the flue gas have a tendency to accumulate in the first stage of the cooling and cleaning system causing problems with contamination of the liquid by-product, ultimately making it unsuitable for use as fertilizer. The cooling and cleaning system of US2008/0178733 also considers use of the ammonia sulfate solution to capture SO₂ in connection with the cooling step.

The gas cleaning method and system in accordance with aspects described herein comprise a modification of the prior art chilled ammonia process flow scheme, which improves the operation of the chilled ammonia process when applied to a process gas having a higher acid, particulate material and/or heavy metal content. This is advantageous in cement or steel manufacturing facilities which produce flue gases having high content of for example sulfur dioxide, heavy metals and particulate material.

To avoid complications with contamination of the ammonium sulfate by-product, an alkaline cleaning step is introduced to heavy metal and particulate content of the process gas and to remove residual SO₂ before the gas enters the chilled ammonia process cooling and cleaning system. Particulate material and other contaminants may be captured in a relatively low volume of liquid in the alkaline cleaning step, which facilitates work-up, recycling and/or waste management of the formed solution/slurry.

The term "alkaline", as used herein in connection with the "alkaline solution or slurry" and "alkaline cleaning" generally refers to an aqueous solution having a pH value above 7.

The alkaline solution or slurry comprises NaOH or Ca(OH)₂.

According to some embodiments, the alkaline solution or slurry has a pH-value of 8 or higher.

The resulting liquid slurry, low in volume flow and having a high content of particulate material and heavy metals is returned, at least partly, to the process in which the process gas was generated. As an example, in the case of cement production, the solids from the resulting slurry may be separated (e.g. by a hydrocyclone, a centrifuge or a filter) and returned to the kiln. Volatile components from the separated solids exit the kiln via the flue gas while the bulk of the heavy metals remain bound to solids in the kiln and exit with the cement clinker. Returning the solids from the alkaline cleaning step to the process in which the process gas was generated can significantly reduce the overall waste stream from the system.

The introduction of an alkaline cleaning in accordance with aspects described herein is advantageous in that it allows reintegration of heavy metals and acidic components back into the industrial process, at the same time preventing contamination of the chilled ammonia process by-products, e.g. ammonium sulfate. The alkaline cleaning system is further advantageous in that it provides efficient removal of SO₂ at increased process temperatures without the draw backs of NH₃ or SO₂ losses associated with washing steps using ammonia sulfate solution. The alkaline cleaning system as described herein can readily be implemented into existing chilled ammonia systems.

The alkaline cleaning is preferably performed at a temperature above the dew point of the process gas in order to avoid bulk condensation of water vapor in the process gas leading to dilution of the alkaline solution or slurry. For this reason, the base or caustic compound of the alkaline solution or slurry should be selected among compounds having sufficiently low vapor pressure at the operating temperature of the alkaline cleaning step, to avoid loss of the base or caustic compound to the process gas. Specifically, ammonia is not suitable as the base or caustic compound in accordance with the aspects described herein due to its high vapor pressure at the relevant operating temperatures leading to contamination of down-stream systems, e.g. the cooling system.

According to some embodiments, the step of bringing the process gas into direct contact with an alkaline solution or slurry is performed at a temperature above the dew point of the process gas.

According to some embodiments, the step of bringing the process gas into direct contact with an alkaline solution or slurry does not involve any substantial condensation of water vapor present in the process gas.

The alkaline cleaning is preferably conducted independently of the other scrubbing or washing operations of the chilled ammonia process, specifically the cooling step, the CO₂ absorption, the optional water wash, and ammonia removal step. This means that the scrubbing or washing liquids, specifically, the cooling liquid, the ammoniated solution or slurry, and wash liquids of the ammonia removal and optional water wash steps, or components thereof, are not utilized in the alkaline cleaning step/system. Conducting the alkaline cleaning independently of the other scrubbing or washing operations of the chilled ammonia process allows the parameters (e.g. temperature, volume flow, pH and solids content) of the alkaline solution or slurry to be optimized independently. This allows the alkaline cleaning to be efficiently performed at a low volume flow with high solids content, and at a relatively high temperature and pH value.

The contaminants include sulfur dioxide, heavy metals and particulate material.

According to some embodiments, the process gas is generated by a power plant, a cement production facility or a steel production facility. Industrial processes such as cement and steel production burning lower quality coal (or waste) may generate flue gases with a higher acid or heavy metal content than characteristic of most power plants.

According to some embodiments, the process gas is generated by burning of a lower quality fuel, such as low quality coal or waste.

According to some embodiments, the process gas is generated by a cement production facility or a steel production facility. Implementation of the alkaline cleaning in accordance with aspects described herein is advantageous in cement or a steel production facilities since in such facilities, the alkaline solution or slurry containing heavy metals and sulfur dioxide captured from the process gas can be readily returned to the process in which the process gas was generated. According to some embodiments, the process gas is generated by a cement production facility.

The alkaline solution or slurry containing contaminants captured from the process gas is, at least partly, returned to the process in which the process gas was generated.

Particulate material captured from the process gas or formed in the alkaline solution or slurry is, at least partly, separated from the alkaline solution or slurry. This configuration provides the dual advantage of i) retaining alkaline solution in the alkaline cleaning liquid loop, reducing the make-up base or caustic compound consumption, and ii) providing a high solids content material to be returned to the industrial process, e.g. cement production.

The introduction of an alkaline cleaning step in accordance with aspects described herein may be especially advantageous in chilled ammonia systems producing ammonium sulfate as a by-product.

According to some embodiments, the wash liquid comprises sulfate, e.g. from added sulfuric acid.

According to some embodiments, the ammonia of the process gas containing ammonia and the sulfate of the wash liquid containing sulfate at least partly react to form ammonium sulfate in aqueous solution.

According to some embodiments, the formed ammonium sulfate is, at least partly, used in the production of fertilizer.

According to another aspect of the invention, there is provided a gas cleaning system for cleaning a process gas containing carbon dioxide and contaminants, said gas cleaning system comprising:
an alkaline cleaning system comprising a gas-liquid contacting device operative for removing, at least partly, contaminants from the process gas, by bringing the process gas into direct contact with an alkaline solution or slurry, and capturing in the alkaline solution or slurry at least a part of the contaminants of the process gas; and
a cooling system comprising a gas-liquid contacting device operative for cooling the process gas depleted in contaminants by bringing the process gas depleted in contaminants into direct contact with a cooling liquid;
wherein said alkaline solution or slurry is separate from the cooling liquid.

The gas cleaning system further comprises:
a CO₂-absorber (10) comprising a gas-liquid contacting device (9) operative for removing, at least partly, carbon dioxide from the process gas by bringing cooled process gas into contact with an ammoniated solution absorbing at least a part of the carbon dioxide; and
an ammonia removal system (4) comprising a gas-liquid contacting device (33) operative for removing, at least partly, ammonia from the process gas, which has been treated in the CO₂-absorber (10) and which comprises ammonia, by bringing the process gas containing ammonia into direct contact with a wash liquid.

The features and advantages of the gas cleaning system correspond to the features and advantages described above in respect of the gas cleaning method.

The contaminants include sulfur dioxide, heavy metals and particulate material.

According to some embodiments, the gas cleaning system is integrated with a process burning a lower quality fuel, such as low quality coal or waste.

According to some embodiments, the gas cleaning system is integrated with a power plant, a cement production facility or a steel production facility.

According to some embodiments, the gas cleaning system is integrated with a cement production facility or a steel production facility.

According to some embodiments, the gas cleaning system is integrated with a cement production facility.

The alkaline cleaning system is confiqured to recirculate a constant amount of the alkaline solution or slurry containing the contaminants absorbed from the process gas via a liquid loop to a gas-liquid contacting device of the alkaline cleaning system and to return an excessive portion of the alkaline solution or slurry containing contaminants absorbed from the process to the process in which the process gas was generated

The alkaline cleaning system further comprises a liquid/solid separator operative for separating, at least partly, solids formed in the alkaline solution or slurry from the solution.

Further objects, features and advantages of the present invention will be apparent from the description and the claims. The above described and other features are exemplified by the following figures and detailed description.

### Brief description of the drawings

Many aspects of the invention can be better understood with reference to the following drawings. The figures are exemplary embodiments, wherein the like elements are numbered alike.
FIG. 1 is a schematic side view depicting an embodiment of the gas cleaning system.
FIG. 2 is a schematic side view depicting an embodiment of an alkaline cleaning system.

### Detailed description of preferred embodiments

As used throughout the present description the unit "ppm" refers to parts per million on a volume basis.

As used throughout the present description the unit "%" refers to % on a volume basis.

The terms "flue gas" and "process gas" are used interchangeably throughout the present description.

The gas cleaning system may for example be useful in a power plant, a cement production facility or a steel production facility. The gas cleaning system is especially useful in industrial processes such as cement or steel production generating flue gases with a higher acid, particulate material and/or heavy metal content than characteristic of most power plants.

During the combustion of a fuel, such as coal or oil, a hot process gas, often referred to as a flue gas or process gas, is generated. The flue gas, which contains polluting substances, including dust particles, sulfur dioxide, SO₂, sulfur trioxide, SO₃, and carbon dioxide, CO₂, leaves the boiler via a gas duct. The gas duct is operative for forwarding the flue gas to a conventional air pollution control system. The flue gas forwarded from the industrial process or associated air pollution control system should have a temperature adjusted to the water content and the ambient pressure. Depending on the industrial process the water dew point temperature may range from about 40 to about 80 °C.

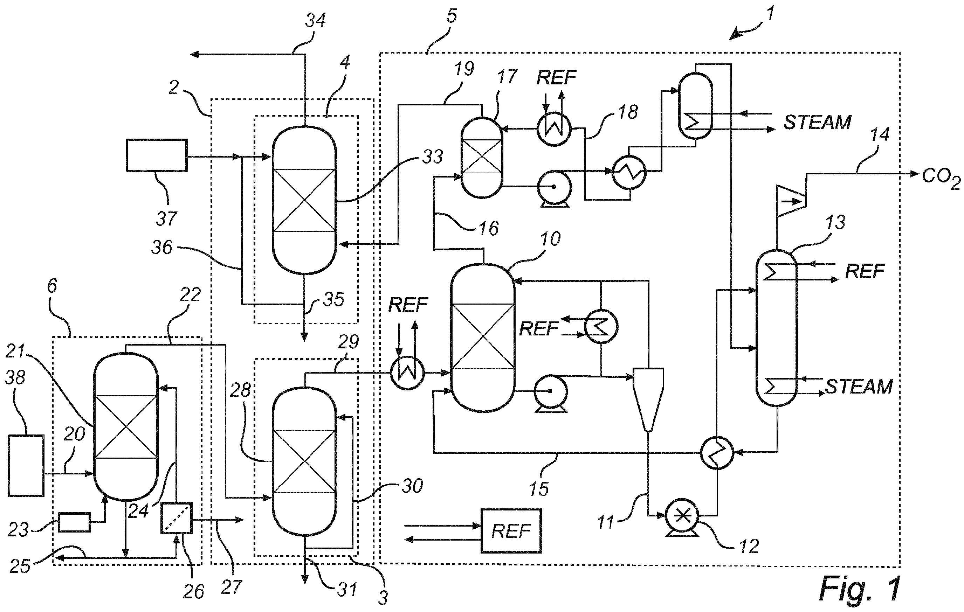

FIG. 1 illustrates schematically an embodiment of the gas cleaning system 1. The system comprises a gas conditioning stage 2 having a cooling system 3 and a ammonia removal system 4, and a CO₂ removal stage 5 comprising a CO₂ absorber 10 and optionally a water wash vessel 17. The gas cleaning system 1 further comprises an alkaline cleaning system (ACS) 6.

The CO₂ removal stage 5 is similar to the carbon dioxide removal system described in WO 2006/022885. The type of carbon dioxide removal system described in WO 2006/022885 is sometimes referred to as the Chilled Ammonia Process, CAP. A flue gas temperature of 0-20 °C, preferably 0-10 °C, is suitable for the CO₂ removal stage 5. The cooling system 3 is operative for cooling the flue gas to a suitable temperature for the CO₂ removal stage 5.

Hence, the CO₂ removal stage 5 comprises, with reference to FIG. 1 of the present application, a CO₂ absorber 10 in which the cooled flue gas is brought into contact with a liquid comprising ammonia in a similar manner as described in WO 2006/022885. A pipe 11 is operative for forwarding, by means of a high pressure pump 12 a CO₂-enriched slurry or solution from the CO₂ absorber 10 to a regenerator 13. Heat is provided to the regenerator 13 by a heater. The high pressure and high temperature in the regenerator 13 causes the release of high-pressure gaseous CO₂, stream 14. A pipe 15 is operative for returning CO₂-lean ammoniated solution or slurry that has been cooled in a cooler from the regenerator 13 to the CO₂ absorber 10.

A duct 16 is operative for forwarding flue gas, having a low concentration of CO₂, from the CO₂ absorber 10 to a water wash vessel 17, which is optional and which is operative for removing ammonia, NH₃, from the flue gas that has been treated in the CO₂ absorber 10. The water wash vessel 17 could have a similar design as the water wash vessel described in WO 2006/022885. A stream of cold water or cold and slightly acidic solution is supplied to the water wash vessel 17 via pipe 18. A duct 19 is operative for forwarding flue gas that has been cleaned in the water wash vessel 17, to the ammonia removal system 4 for further cleaning.

The alkaline cleaning system (ACS) 6, cooling system 3, and ammonia removal system 4 will be described in more detail hereinafter.

In typical prior chilled ammonia gas cleaning systems the cooling system is also used for removal of acidic gaseous components, such as SO₂, and also for removal of other contaminants, such as particulate material and heavy metals, which are typically present in the gas stream downstream of wet or dry flue gas desulfurization (FGD) systems or other air quality control systems typically employed.

The gas cleaning systems according to the embodiments described herein further comprise an alkaline cleaning system 6, arranged upstream of the cooling system 3 with respect to the main flow direction of the gas stream.

The flue gas, optionally processed in a conventional air pollution control system as described above, enters the ACS 6 via the duct 20. The ACS comprises at least one gas-liquid contacting device 21. Each gas-liquid contacting device is arranged to bring the gas stream into contact with an alkaline solution or slurry. The contacting may preferably be performed in counter current flow such that the gas enters the gas-liquid contacting device 21 at one end (typically at the bottom) and the liquid enters the gas-liquid contacting device at the other end (typically at the top). The flue gas with a reduced content of SO₂, particulate material and/or heavy metals leaves the ACS via the duct 22 and is forwarded to the cooling system 3.

The alkaline solution or slurry comprises an aqueous solution of a base or caustic compound. The base or caustic compound of the alkaline solution or slurry may for example be NaOH or Ca(OH)₂. The alkaline solution or slurry preferably has a pH value of 8 or higher. The pH value of the alkaline solution or slurry is maintained by introduction of make-up base or caustic compound or composition by a base storage and dosing system 23.

The incoming process gas entering the ACS 6 comprises varying amounts of water vapor and may in some cases be saturated with water vapor. In order to avoid dilution of the alkaline solution or slurry by bulk condensation of water vapor from the incoming gas stream, the alkaline cleaning step is performed at a temperature above the dew point of the process gas. For this reason, the base or caustic compound of the alkaline solution or slurry should be selected among compounds having sufficiently low vapor pressure at the operating temperature of the alkaline cleaning step, to avoid loss of the base or caustic compound to the process gas. Specifically, the base or caustic compound should not be ammonia due to its high vapor pressure at the relevant operating temperatures leading to contamination of down-stream systems, e.g. the cooling system.

When the alkaline solution or slurry is brought into contact with the process gas in the gas/liquid contacting device 21, at least a part of the sulfur dioxide, heavy metals and particulate material of the process gas is captured in the alkaline solution or slurry.

The alkaline solution or slurry may thus further contain amounts of contaminants absorbed from the gas stream such sulfate and other sulfur derivatives formed upon dissolution of sulfur dioxide and sulfur trioxide from the gas stream in the alkaline solution or slurry. The alkaline solution or slurry may also comprise significant amounts of particulate material captured from the gas stream or formed due to chemical reaction between different components in the alkaline solution or slurry.

The alkaline solution or slurry leaving the gas-liquid contacting device is recirculated to the gas-liquid contacting device via a liquid loop 24.

The amount of alkaline solution or slurry in the liquid loop 24 of the ACS 6 is kept essentially constant. An increase in the volume of alkaline solution or slurry in the loop is compensated by the removal of alkaline solution or slurry from the loop via one or more bleed streams.

The ACS comprises a bleed stream 25 for removing a portion of the alkaline solution or slurry circulating in the liquid loop 24. The alkaline solution or slurry removed via the bleed stream 25 is returned, at least partly, to the process in which the process gas was generated or sent for waste treatment or disposal.

The ACS 6 further comprises a liquid/solid separator 26 operative for separating, at least partly, solids formed in the alkaline solution or slurry. The liquid/solid separator 26 may for example comprise a hydrocyclone, a centrifuge or a filter. The liquid/solid separation results in a low solids stream which may be returned to the gas/liquid contacting device 21 of the ACS, and a high solids (or sludge) stream 27, which may be returned to the process in which the process gas was generated, or sent for waste treatment or disposal.

The main functions of the ACS are i) to remove, at least partly, sulfur dioxide, from the process gas, ii) to remove, at least partly, heavy metals, from the process gas, and iii) to remove, at least partly, particulate material, from the process gas.

The gas conditioning stage 2 has a cooling system 3 and an ammonia removal system 4, each comprising one or more gas-liquid contacting devices.

The flue gas enters the cooling system via the duct 22. The cooling system 3 (also referred to herein as the "direct contact cooler" or "DCC") comprises at least one gas-liquid contacting device 28. Each gas-liquid contacting device is arranged to bring the gas stream into contact with a cooling liquid. The contacting may preferably be performed in counter current flow such that the gas enters the gas-liquid contacting device at one end (typically at the bottom) and the liquid enters the gas-liquid contacting device at the other end (typically at the top). The cooled flue gas leaves the cooling system via the duct 29.

The cooling liquid, is generally water or an aqueous solution. The liquid may contain amounts of contaminants absorbed from the gas stream such sulfate and other sulfur derivatives formed upon dissolution of sulfur dioxide and sulfur trioxide from the gas stream in the cooling liquid.

The warm cooling liquid leaving the gas-liquid contacting device is cooled, e.g. in a cooling tower (not shown), and recirculated to the gas-liquid contacting device 28 via a liquid loop 30. In the cooling tower, ambient air is supplied via an inlet duct to the cooling tower and cools the warm cooling liquid in accordance with the well-known principles of cooling towers.

The amount of cooling liquid in the liquid loop 30 of the cooling system may preferably be kept essentially constant. Variations in the volume of cooling liquid in the loop may be compensated by the addition or removal of liquid to the loop. Generally, the incoming flue gas to be cleaned will contain a certain amount of water vapor, which is at least partly condensed when the gas is cooled in the cooling system leading to an increase of the volume of cooling liquid in the loop. This increase should preferably be balanced by a corresponding decrease. This decrease may be achieved, e.g. by water vapor leaving the system with the cleaned flue gas, or in different cooling devices, such as cooling towers, or by cooling liquid leaving the system in one or more bleed streams 31.

The main functions of the cooling system are i) to reduce the flue gas temperature to the required temperature for the absorption process, ii) to condense the major part of the water vapor contained in the incoming process gas to minimize the water ingress to the CO₂ absorber system, at the same time significantly reducing the volumetric gas flow and increasing the CO₂ concentration, and iii) to remove residual trace components, primarily SO₂ and other acidic components from the process gas.

The cold flue gas from the CO₂ absorber 10 and optional water wash vessel 17 enters the ammonia removal system 4 via the duct 19. The ammonia removal system 4 (also referred to herein as the "direct contact heater" or "DCH") comprises at least one gas-liquid contacting device 33. Each gas-liquid contacting device is arranged to bring the gas stream leaving the CO₂ removal stage 5 into contact with a wash liquid. The contacting may preferably be performed in counter current flow such that the gas enters the gas-liquid contacting device 33 at one end (typically at the bottom) and the wash liquid enters the gas-liquid contacting device at the other end (typically at the top). The flue gas, depleted in ammonia and reheated, leaves the ammonia removal system via duct 34, which is operative for forwarding the flue gas to a stack which releases the flue gas to the atmosphere.

The wash liquid, is generally an aqueous solution comprising sulfuric acid. The wash liquid absorbs ammonia from the gas stream leaving the CO₂ removal stage 5 to produce a gas stream depleted in ammonia and a wash liquid containing sulfate from the sulfuric acid and ammonia from the gas stream. Sulfate and ammonia react in the wash liquid to form ammonium sulfate. A bleed stream 35 containing primarily dissolved ammonium sulfate at a concentration of 20-35 wt% is purged from this section for disposal or commercial use as fertilizer.

The wash liquid leaving the gas-liquid contacting device is recirculated to the gas-liquid contacting device via a liquid loop 36 and a low pH value of the wash liquid is maintained by introduction of make-up sulfuric acid (H₂SO₄) by a sulfuric acid storage and dosing system 37.

The amount of wash liquid in the liquid loop 36 of the ammonia removal system 4 may preferably be kept essentially constant. Variations in the volume of cooling liquid in the loop may be compensated by the addition or removal of liquid to the loop 36.

The main functions of the ammonia removal system are i) to reduce the ammonia content of the gas stream leaving the CO₂ removal stage to a concentration acceptable for release to the atmosphere, and ii) to reheat the gas stream leaving the CO₂ removal stage.

The gas stream entering the ammonia removal system 4 will generally be at a temperature of about 7-10 °C and have an ammonia content of less than 200 ppm. In the ammonia removal system 4 the ammonia content of the gas stream is reduced, preferably to about 5 ppmv or less, and the temperature of the gas stream is raised, preferably to 40 °C, before the gas is sent to the stack.

Optionally, the cooling system 3 and ammonia removal system 4 are arranged in liquid connection such that liquid used in one system may be reused in the other system. For example, warm cooling liquid from the cooling system 3 may be used for reheating the cold gas stream in the ammonia removal system 4.

The gas cleaning system 1 of FIG. 1 is integrated with CO₂ emitting industry 38. The gas cleaning system with a ACS as described herein is preferably integrated in a cement or steel production facility. The high solids stream leaving the ACS via line 25 and/or 27 is sent back to the cement or steel production facility respectively. The high solids stream may for example be introduced at the top end of the kiln of the cement production facility, or introduced into a blast furnace of the steel production facility.

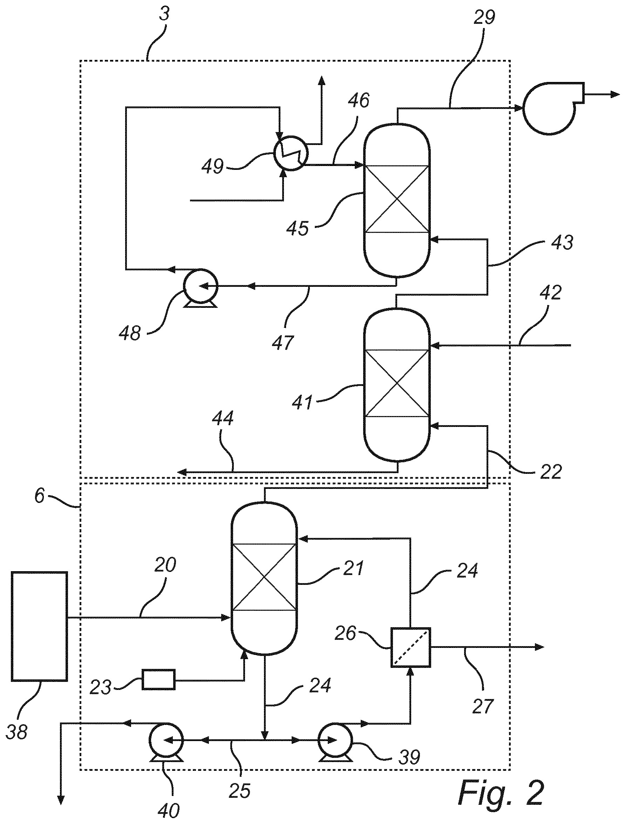

FIG. 2 illustrates an embodiment of the alkaline cleaning system (ACS) and the cooling system more in detail. The flue gas, optionally processed in a conventional air pollution control system as described above, enters the ACS 6 via the duct 20.

The ACS 6 comprises a gas-liquid contacting device 21 operative for removing contaminants from the flue gas by contacting it directly with an alkaline solution or slurry, which is supplied via a liquid loop 24 and circulation pump 39. A set of nozzles is operative for distributing the alkaline solution or slurry over the gas-liquid contacting device 21, which could have the form of a structured packing, or another suitable type of gas-liquid contacting filling. The flue gas, saturated with water and having a temperature of, for example 40-80 °C, enters the ACS 6 and is forwarded upwards, through the gas-liquid contacting device 21. The flue gas leaves the ACS with a reduced content of SO₂, particulate material and/or heavy metals. The alkaline solution or slurry comprising SO₂, particulate material and/or heavy metals captured from the flue gas is collected at the bottom of the gas-liquid contacting device 21.

The alkaline solution or slurry comprising SO₂, particulate material and/or heavy metals captured from the flue gas is forwarded via the liquid loop 24 to a liquid/solid separator 26. The liquid/solid separator 26 comprises a hydrocyclone, a centrifuge or a filter operative for separating, at least partly, particulate material in the alkaline solution or slurry. The liquid/solid separator may for example comprise a hydrocyclone, a centrifuge or a filter. The liquid/solid separation results in a low solids stream which is returned to the gas/liquid contacting device of the ACS via the liquid loop 24 for capturing further contaminants, and a high solids (or sludge) stream, which leaves the ACS via line 27. The high solids (or sludge) stream may be returned to the process in which the process gas was generated, or sent for waste treatment or disposal.

In order to maintain the liquid balance of the ACS, a portion of the low solids stream from the liquid/solid separator 24 can be withdrawn as a bleed stream via pipe 25 and product pump 40 and sent for reuse, waste treatment or disposal.

In order to maintain the pH value of the alkaline solution or slurry, the ACS comprises a base storage and dosing system 23 operative for introducing make-up base or caustic compound. The base or caustic compound of the alkaline solution or slurry may for example be NaOH or Ca(OH)₂.

A control device (not shown) may be operative for controlling the operation of the ACS 6. The control device may comprise an automatic controller, which may be a general-purpose computer, application specific computing device or other programmable controller. The control device may comprise sensors for automated or manual measurement of relevant parameters, such as e.g. pH or temperature. For example, a pH-meter may be operative for measuring the pH of the alkaline solution or slurry leaving the liquid/solid separator 26 and for sending a signal containing information about the measured pH to the control device. In response to such a signal the control device may control the supply of make-up base or caustic compound from the base storage and dosing system 23.

The cooling system 3 comprises two gas-liquid contacting devices 41, arranged separately and in sequence with respect to the main flow direction of the flue gas stream.

The flue gas leaving the ACS via duct 22 first reaches a first gas-liquid contacting device 41, also referred to herein as the first direct contact cooler (DCC). The first DCC 41 is operative for cooling of the flue gas by contacting it directly with a cooling liquid, preferably water or an aqueous solution, which is supplied via pipe 42. A set of nozzles is operative for distributing the liquid over the gas-liquid contacting device 41, which could have the form of a structured packing, or another suitable type of gas-liquid contacting filling. The flue gas enters the first DCC 41 via a gas inlet and is forwarded upwards, through the gas-liquid contacting device 41. The flue gas leaves the first DCC 41 at a reduced temperature via a duct 43. The cooling liquid and the flue gas are contacted with each other in the gas-liquid contacting device 41 under exchange of heat. The warm cooling liquid is collected at the bottom of the first DCC 41 and forwarded via pipe 44.

The flue gas leaving the first DCC 41 via duct 43 then reaches a second gas-liquid contacting device 45, also referred to herein as the second DCC. The second DCC 45 is operative for further cooling of the flue gas by contacting it directly with a refrigerated cooling liquid, which is supplied via a pipe 46. A set of nozzles is operative for distributing the liquid over the gas-liquid contacting device 45, which could have the form of a structured packing, or another suitable type of gas-liquid contacting filling. The flue gas enters the second DCC 45 via duct 43 and is forwarded upwards, through the gas-liquid contacting device 45. The further cooled flue gas leaves the second DCC via duct 29. The refrigerated cooling liquid and the flue gas are contacted with each other in the gas-liquid contacting device 45 under exchange of heat. The cooling liquid used in the second DCC is collected at the bottom of the second DCC 45, forwarded via pipe 47 and circulation pump 48 to a chiller 49, and refrigerated by a refrigerant in chiller 49 before being recirculated to the second DCC 45.

The flue gas leaving the cooling system 3 via duct 29 has a temperature of 0-20 °C, preferably 0-10 °C. The duct 29 is operative for forwarding the flue gas to the CO₂ removal stage. The flue gas in duct 29 may optionally be subjected to one or more indirect coolers (not shown) operative for cooling the flue gas to the desired temperature of 0-20 °C, preferably 0-10 °C before it is fed to the CO₂ absorber.

Advantages provided by embodiments described herein include:
1) The ACS allows reintegration of heavy metals and acidic components back into the industrial process,
2) Contamination of the chilled ammonia process by-products, e.g. ammonium sulfate, is prevented.
3) The alkaline cleaning system provides efficient removal of SO₂ at increased process temperatures without the drawbacks of NH₃ or SO₂ losses associated with washing steps using ammonia sulfate solution.
4) The ACS can readily be implemented into existing chilled ammonia systems.

All features and advantages described herein are applicable to both the gas cleaning method and gas cleaning system of the different aspects described herein.

## Claims

1. A method of cleaning a process gas containing carbon dioxide and contaminants including sulfur dioxide and particulate material, said method comprising the steps of:
bringing the process gas into direct contact with an alkaline solution or slurry, and capturing in the alkaline solution or slurry at least a part of the contaminants of the process gas;
bringing the process gas, depleted in contaminants, into direct contact with a cooling liquid to form a cooled process gas;
wherein said alkaline solution or slurry is separate from the cooling liquid; and
wherein the alkaline solution or slurry comprises NaOH or Ca(OH)₂;
**characterized in that**
the contaminants of the process gas further include heavy metals;
recirculating a constant amount of the alkaline solution or slurry containing contaminants captured from the process gas and returning an excessive portion of the alkaline solution or slurry containing contaminants captured from the process gas to the process in which the process gas was generated;
separating, at least partly, particulate material captured from the process gas or formed in the alkaline solution or slurry from the alkaline solution or slurry;
bringing the cooled process gas into direct contact with an ammoniated solution or slurry to remove, at least partly, carbon dioxide from the process gas, and to form a process gas containing ammonia; and
bringing the process gas containing ammonia into direct contact with a wash liquid to remove, at least partly, ammonia from the process gas.

2. A method according claim 1, wherein the alkaline solution or slurry has a pH-value of 8 or higher.

3. A method according to any one of the preceding claims, wherein the step of bringing the process gas into direct contact with an alkaline solution or slurry is performed at a temperature above the dew point of the process gas.

4. A method according to any one of the preceding claims, wherein the process gas is generated by a cement production facility or a steel production facility.

5. A gas cleaning system (1) for cleaning a process gas containing carbon dioxide and contaminants including sulfur dioxide and particulate material, said gas cleaning system comprising:
an alkaline cleaning system (6) comprising a gas-liquid contacting device (21) operative for removing, at least partly, contaminants from the process gas, by bringing the process gas into direct contact with an alkaline solution or slurry,
and capturing in the alkaline solution or slurry at least a part of the contaminants of the process gas; and
a cooling system (3) comprising a gas-liquid contacting device (28) operative for cooling the process gas depleted in contaminants by bringing the process gas depleted in contaminants into direct contact with a cooling liquid;
wherein said alkaline solution or slurry is separate from the cooling liquid; and
wherein the gas-liquid contacting device (21) is configured to use an alkaline solution or slurry comprising NaOH or Ca(OH)₂;
**characterized in that**
the contaminants of the process gas further include heavy metals;
the alkaline cleaning system (6) is configured to recirculate a constant amount of alkaline solution or slurry containing contaminants absorbed from the
process gas via a liquid loop (24) to the gas-liquid contacting device (21) and to return an excessive portion of the
alkaline solution or slurry containing contaminants absorbed from the process gas to the process in which the process gas was generated;
the alkaline cleaning system (6) further comprises a liquid/solid separator (26) operative for separating, at least partly, solids formed in the alkaline solution or slurry from the solution;
the gas cleaning system further comprising:
a CO₂-absorber (10) comprising a gas-liquid contacting device (9) operative for removing, at least partly, carbon dioxide from the process gas by bringing cooled process gas into contact with an ammoniated solution absorbing at least a part of the carbon dioxide; and
an ammonia removal system (4) comprising a gas-liquid contacting device (33) operative for removing, at least partly, ammonia from the process gas, which has been treated in the CO₂-absorber (10) and which comprises ammonia, by bringing the process gas containing ammonia into direct contact with a wash liquid.

6. A gas cleaning system according to claim 5, wherein said gas cleaning system is integrated with a cement production facility or a steel production facility.

## Patentansprüche

1. Verfahren zum Reinigen eines Prozessgases, das Kohlendioxid und Verunreinigungen einschließlich Schwefeldioxid und partikelförmiges Material enthält, umfassend die Schritte:
direktes Inkontaktbringen des Prozessgases mit einer alkalischen Lösung oder Aufschlämmung und Auffangen mindestens eines Teils der Verunreinigungen des Prozessgases in der alkalischen Lösung oder Aufschlämmung;
direktes Inkontaktbringen des an Verunreinigungen abgereicherten Prozessgases mit einer Kühlflüssigkeit, um ein gekühltes Prozessgas zu bilden;
wobei die alkalische Lösung oder Aufschlämmung von der Kühlflüssigkeit getrennt ist; und
wobei die alkalische Lösung oder Aufschlämmung NaOH oder Ca(OH)₂ umfasst;
**dadurch gekennzeichnet, dass**
die Verunreinigungen des Prozessgases ferner Schwermetalle einschließen;
Umwälzen einer konstanten Menge der alkalischen Lösung oder Aufschlämmung, die Verunreinigungen enthält, die aus dem Prozessgas aufgefangen wurden, und Rückführen eines übermäßigen Anteils der alkalischen Lösung oder Aufschlämmung, die Verunreinigungen enthält, die aus dem Prozessgas aufgefangen wurden, in den Prozess, in dem das Prozessgas erzeugt wurde;
Trennen, mindestens teilweise, von aus dem Prozessgas aufgefangenem oder in der alkalischen Lösung oder Aufschlämmung gebildetem partikelförmigem Material aus der alkalischen Lösung oder Aufschlämmung;
direktes Inkontaktbringen des gekühlten Prozessgases mit einer Ammoniaklösung oder -aufschlämmung, um Kohlendioxid mindestens teilweise aus dem Prozessgas zu entfernen und um ein ammoniakhaltiges Prozessgas zu bilden; und
direktes Inkontaktbringen des ammoniakhaltigen Prozessgases mit einer Waschflüssigkeit, um Ammoniak mindestens teilweise aus dem Prozessgas zu entfernen.

2. Verfahren nach Anspruch 1, wobei die alkalische Lösung oder Aufschlämmung einen pH-Wert von 8 oder höher aufweist.

3. Verfahren nach einem der vorstehenden Ansprüche, wobei der Schritt des direkten Inkontaktbringens des Prozessgases mit einer alkalischen Lösung oder Aufschlämmung bei einer Temperatur über dem Taupunkt des Prozessgases durchgeführt wird.

4. Verfahren nach einem der vorstehenden Ansprüche, wobei das Prozessgas durch eine Zementproduktionsanlage oder eine Stahlproduktionsanlage erzeugt wird.

5. Gasreinigungssystem (1) zum Reinigen eines Prozessgases, das Kohlendioxid und Verunreinigungen einschließlich Schwefeldioxid und partikelförmiges Material enthält, wobei das Gasreinigungssystem umfasst:
ein alkalisches Reinigungssystem (6), das eine Gas-Flüssigkeits-Kontaktiervorrichtung (21) umfasst, das betriebsfähig ist, um Verunreinigungen mindestens teilweise aus dem Prozessgas zu entfernen, indem das Prozessgas in direkten Kontakt mit einer alkalischen Lösung oder Aufschlämmung gebracht wird, und mindestens einen Teil der Verunreinigungen des Prozessgases in der alkalischen Lösung oder Aufschlämmung aufzufangen; und
ein Kühlsystem (3), das eine Gas-Flüssigkeits-Kontaktiervorrichtung (28) umfasst, die betriebsfähig ist, um das an Verunreinigungen abgereicherte Prozessgas durch direktes Inkontaktbringen des an Verunreinigungen abgereicherten Prozessgases mit einer Kühlflüssigkeit zu kühlen;
wobei die alkalische Lösung oder Aufschlämmung von der Kühlflüssigkeit getrennt ist; und
wobei die Gas-Flüssigkeits-Kontaktiervorrichtung (21) zum Verwenden einer alkalischen Lösung oder Aufschlämmung, die NaOH oder Ca(OH)₂ umfasst, konfiguriert ist;
**dadurch gekennzeichnet, dass**
die Verunreinigungen des Prozessgases ferner Schwermetalle einschließen;
das alkalische Reinigungssystem (6) konfiguriert ist, um eine konstante Menge an alkalischer Lösung oder Aufschlämmung, die Verunreinigungen enthält, die aus dem Prozessgas absorbiert wurden, über eine Flüssigkeitsschleife (24) zu der Gas-Flüssigkeits-Kontaktiervorrichtung (21) umzuwälzen und einen übermäßigen Anteil der alkalischen Lösung oder Aufschlämmung, die Verunreinigungen enthält, die aus dem Prozessgas absorbiert wurden, in den Prozess, in dem das Prozessgas erzeugt wurde, zurückzuführen;
das alkalische Reinigungssystem (6) ferner einen Flüssigkeits-FeststoffAbscheider (26) umfasst, der betriebsfähig ist, um Feststoffe, die sich in der alkalischen Lösung oder Aufschlämmung bilden, mindestens teilweise aus der Lösung zu trennen;
wobei das Gasreinigungssystem ferner umfasst:
einen CO₂-Absorber (10), der eine Gas-Flüssigkeits-Kontaktiervorrichtung (9) umfasst, die betriebsfähig ist, um Kohlendioxid mindestens teilweise aus dem Prozessgas zu entfernen, indem gekühltes Prozessgas mit einer Ammoniaklösung in Kontakt gebracht wird, die mindestens einen Teil des Kohlendioxids absorbiert; und
ein Ammoniakentfernungssystem (4), das eine Gas-Flüssigkeits-Kontaktiervorrichtung (33) umfasst, die betriebsfähig ist, um Ammoniak mindestens teilweise aus dem Prozessgas, welches in dem CO₂-Absorber (10) behandelt wurde und welches Ammoniak umfasst, zu entfernen, indem das ammoniakhaltige Prozessgas in direkten Kontakt mit einer Waschflüssigkeit gebracht wird.

6. Gasreinigungssystem nach Anspruch 5, wobei das Gasreinigungssystem in eine Zementproduktionsanlage oder eine Stahlproduktionsanlage integriert ist.

## Revendications

1. Procédé pour épurer un gaz de processus contenant du dioxyde de carbone et des contaminants incluant du dioxyde de soufre et un matériau particulaire, ledit procédé comprenant les étapes consistant à :
amener le gaz de processus en contact direct avec une solution ou une boue alcaline, et capturer dans la solution ou la boue alcaline au moins une partie des contaminants du gaz de processus ;
amener le gaz de processus, appauvri en contaminants, en contact direct avec un liquide de refroidissement pour la formation d'un gaz de processus refroidi ;
dans lequel ladite solution ou boue alcaline est séparée du liquide de refroidissement ; et
dans lequel la solution ou la boue alcaline comprend du NaOH ou du Ca(OH)₂ ;
**caractérisé en ce que**
les contaminants du gaz de processus incluent en outre des métaux lourds ;
recirculer une quantité constante de la solution ou de la boue alcaline contenant des contaminants capturés à partir du gaz de processus et renvoyer une part excessive de la solution ou de la boue alcaline contenant des contaminants capturés à partir du gaz de processus jusqu'au processus dans lequel le gaz de processus a été généré ;
séparer, au moins partiellement, un matériau particulaire capturé à partir du gaz de processus ou formé dans la solution ou la boue alcaline à partir de la solution ou de la boue alcaline ;
amener le gaz de processus refroidi en contact direct avec une solution ou une boue ammoniaquée pour l'élimination, au moins partiellement, de dioxyde de carbone du gaz de processus, et pour la formation d'un gaz de processus contenant de l'ammoniac ; et
amener le gaz de processus contenant de l'ammoniac en contact direct avec un liquide de lavage pour l'élimination, au moins partiellement, d'ammoniac du gaz de processus.

2. Procédé selon la revendication 1, dans lequel la solution ou la boue alcaline a une valeur de pH de 8 ou plus.

3. Procédé selon l'une quelconque des revendications précédentes, dans lequel l'étape consistant à amener le gaz de processus en contact direct avec une solution ou une boue alcaline est effectuée à une température supérieure au point de rosée du gaz de processus.

4. Procédé selon l'une quelconque des revendications précédentes, dans lequel le gaz de processus est généré par une installation de production de ciment ou une installation de production d'acier.

5. Système d'épuration de gaz (1) pour épurer un gaz de processus contenant du dioxyde de carbone et des contaminants incluant du dioxyde de soufre et un matériau particulaire, ledit système d'épuration de gaz comprenant :
un système d'épuration alcaline (6) comprenant un dispositif de mise en contact de gaz-liquide (21) pouvant être actionné pour éliminer, au moins partiellement, des contaminants du gaz de processus, en amenant le gaz de processus en contact direct avec une solution ou une boue alcaline, et capturer dans la solution ou la boue alcaline au moins une partie des contaminants du gaz de processus ; et
un système de refroidissement (3) comprenant un dispositif de mise en contact de gaz-liquide (28) pouvant être actionné pour refroidir le gaz de processus appauvri en contaminants en amenant le gaz de processus appauvri en contaminants en contact direct avec un liquide de refroidissement ;
dans lequel ladite solution ou boue alcaline est séparée du liquide de refroidissement ; et
dans lequel le dispositif de mise en contact de gaz-liquide (21) est configuré pour l'utilisation d'une solution ou d'une boue alcaline comprenant du NaOH ou du Ca(OH)₂ ;
**caractérisé en ce que**
les contaminants du gaz de processus incluent en outre des métaux lourds ;
le système d'épuration alcaline (6) est configuré pour la recirculation d'une quantité constante de solution ou de boue alcaline contenant des contaminants absorbés à partir du gaz de processus par l'intermédiaire d'une boucle liquide (24) jusqu'au dispositif de mise en contact de gaz-liquide (21) et pour le renvoi d'une part excessive de la solution ou de la boue alcaline contenant des contaminants absorbés à partir du gaz de processus jusqu'au processus dans lequel le gaz de processus a été généré ;
le système d'épuration alcaline (6) comprend en outre un séparateur de liquide/solide (26) pouvant être actionné pour séparer, au moins partiellement, des solides formés dans la solution ou la boue alcaline à partir de la solution ;
le système d'épuration de gaz comprenant en outre :
un absorbeur de CO₂ (10) comprenant un dispositif de mise en contact de gaz-liquide (9) pouvant être actionné pour éliminer, au moins partiellement, du dioxyde de carbone du gaz de processus en amenant un gaz de processus refroidi en contact avec une solution ammoniaquée absorbant au moins une partie du dioxyde de carbone ; et
un système d'élimination d'ammoniac (4) comprenant un dispositif de mise en contact de gaz-liquide (33) pouvant être actionné pour éliminer, au moins partiellement, de l'ammoniac du gaz de processus, qui a été traité dans l'absorbeur de CO₂ (10) et qui comprend de l'ammoniac, en amenant le gaz de processus contenant de l'ammoniac en contact direct avec un liquide de lavage.

6. Système d'épuration de gaz selon la revendication 5, dans lequel ledit système d'épuration de gaz est intégré à une installation de production de ciment ou à une installation de production d'acier.
